# EUROPEAN PATENT APPLICATION

(11) **EP 2 087 798 A1**
(43) Date of publication of application: **12.08.2009**
(21) Application number: 07737368.6
(22) Date of filing: 26.02.2007
(51) Int. Cl.: A23L 1/308, A23L 1/05

(54) **POLYSACCHARIDE THICKENER-CONTAINING DIETARY FIBER COMPOSITION**

(30) Priority: 02.10.2006 JP 2006270325
(71) Applicant: Shimizu Chemical Corporation, Hiroshima 729-0321 (JP)
(72) Inventor: SHIMIZU, Hideki, Mihara-shi, Hiroshima 7290321 (JP); SHIMIZU, Hisao, Mihara-shi, Hiroshima 7290321 (JP)
(74) Representative: Vossius & Partner
(86) International application number: PCT/JP2007/053515
(87) International publication number: WO 2008/041375

(57) **Abstract**

It is intended to provide a dietary fiber composition containing Amorphophallus konjac as an ingredient for an easy-to-take functional food, a controlled-release drug or the like, and it is obtained by adding and mixing water in Amorphophallus konjac with an average molecular weight of 50,000 or more purified using an alcohol from a matter in which starch is separated and removed from a tuber of Amorphophallus konjac plant and an inclusion agent which suppresses a water-absorbing property of Amorphophallus konjac. Further, it can also be obtained by adding and mixing water in one or more members selected from polysaccharide thickeners consisting of Amorphophallus konjac, seed coat of Plantago ovata (psyllium), carrageenan, xanthan gum, curdlan, pectin, gum Arabic, chitin, chitosan, guar gum, gellan gum, tara gum, tamarind gum, tragacanth gum and pullulan and an inclusion agent which suppresses a water-absorbing property of the polysaccharide thickeners.

## Description

### TECHNICAL FIELD

This invention relates to a polysaccharide thickener-containing dietary fiber composition having a functional property applied to an ingredient for foods, medicines, cosmetics or the like.

### BACKGROUND ART

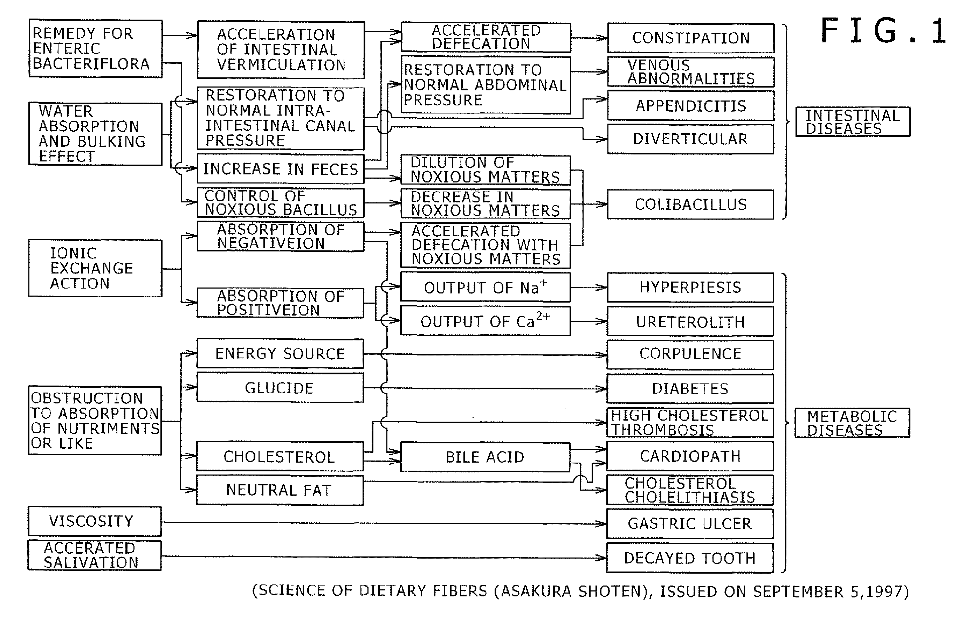

In general, a polysaccharide thickener contains dietary fibers in large quantities, and various physiological functions provided in case where the dietary fibers are taken by a person have been also reported as shown in FIG. 1.

As described in Patent document 1, a method of obtaining an edible sponge-like gel by adding glucomannan in the dietary fibers, and subjecting the mixture to heating for gelation, followed by freezing and thawing has been known as well.
Patent document 1: Official Gazette of Japanese Patent Laid-open No. 2004-313058

### DISCLOSURE OF THE INVENTION

### Problems to be solved by the Invention

However, it is necessary to take a large quantity of polysaccharide thickeners for fulfillling the above functional property by taking of the polysaccharide thickener.
By the way, the polysaccharide thickener, while being obtainable as is added in many types of foods, causes a change in physical properties with the effect of viscosity or the like, so that it is difficult to add the polysaccharide thickener in large quantities.

Further, gelation described in the above Patent document 1 has an irreversible property, and thus provides a disadvantage that elution of nourishing contents occurs in process of heating for gelation and/or of solidifying, or alternatively, at the time of later peptization.
Furthermore, for the foods such as health foods in which the dietary fibers are contained, most of them, while being available as easy-to-take foods obtained by forming raw materials as they are into the shape of tablets, capsules or the like, is extremely low in dietary fiber contents, and besides, has limitation in intake.
To overcome the above problems, the present invention is primarily intended to provide a widely applicable dietary fiber composition that may be taken much enough to fulfill a functional property as compared with existing health foods, be provided in various shapes and/or be flavored.

The present invention is secondly intended to provide a dietary fiber composition that is also applicable to a controlled-release drug by causing gentle elution of effective ingredients for medicines or the like.

### Means for solving the problems

Firstly, a dietary fiber composition of the present invention for achieving the above objects is characterized by being obtained by adding and mixing water in Amorphophallus konjac with an average molecular weight of 50,000 or more purified using an alcohol from a matter in which starch is separated and removed from a tuber of Amorphophallus konjac plant and an inclusion agent which suppresses a water-absorbing property of Amorphophallus konjac.

Secondly, it is characterized by being obtained by adding and mixing water in one or more members selected from polysaccharide thickeners consisting of Amorphophallus konjac, seed coat of Plantago ovata (psyllium), carrageenan, xanthan gum, curdlan, pectin, gum Arabic, alginic acid, chitin, chitosan, guar gum, gellan gum, tara gum, tamarind gum, tragacanth gum and pullulan and an inclusion agent which suppresses a water-absorbing property of the polysaccharide thickeners.

Thirdly, it is **characterized in that** the inclusion agent consists of at least one or more materials selected from a group consisting of saccharides, edible oils, dairy products such as cow's milk and sweetened condensed milk, honeys, soybean milks, cocoa powders and tomato pastes (juice and ketchup).

Fourthly, it is **characterized in that** the polysaccharide thickener is contained in an amount of 1 to 60 % by weight with respect to materials other than water.

Fifthly, it is **characterized in that** the composition is given drying in the manner of vacuum drying or freeze-drying under reduced pressure.

### Effectiveness of the Invention

With the composition of the present invention as formed as described the above, it becomes possible to take the dietary fibers easily in the feeling of having snacked sweet stuffs. Further, taking the dietary fibers mixed in the foods allows a recovery of viscosity to be made within the human body, so that it may be expected that the physiological functions as of the polysaccharide thickener such as glucomannan will be provided. It also becomes possible to be provided in various shapes and/or flavored when cooking and/or processing the foods. Furthermore, applications to cosmetics or the like containing the controlled-release drug that provides the gentle elution of effective ingredients for the medicines or the like are also possible.

### BRIEF DESCRIPTION OF THE DRAWINGS

FIG. 1 is a diagram illustrating the relation between physiological functions of dietary fibers and diseases;
FIG. 2 is a graph illustrating the results of a viscosity recovery test on a composition according to the present invention; and
FIG. 3 is a graph illustrating the results of an elution test on an ingredient (vitamin B₂) contained in the composition according to the present invention.

### BEST MODE FOR CARRYING OUT THE INVENTION

According to the present invention, as the result of various examinations done for achievement of the above objects, there has been a confirmation of remarkable effectiveness as to a polysaccharide thickener, more specifically, Amorphophallus konjac. The Amorphophallus konjac for use in the present invention is equally named glucomannan, which belongs to a storable polysaccharide contained in a tuber of Amorphophallus Konjac K. Koch, and is obtained by being extracted and purified from a matter that shares about 8 to 10% in the tuber.

While materials obtained by, after washing the tuber with water, slicing it for drying and separating starch or the like are generally available by the name of devil's tongue powder, the use of those further subjected to purified using an alcohol up to a high purity of 85% or above is also possible. In this connection, the present invention could provide Amorphophallus konjac with higher safety in the manner of raising the purity of Amorphophallus konjac to a higher degree through extraction with the alcohol.

While the Amorphophallus konjac differs in molecular weight depending on growing districts, breeds and types of Amorphophallus konjac K. Koch, the use of purifying technology enables the molecular weight of Amorphophallus konjac to be controlled.

It is also well known that the Amorphophallus konjac undergoes degradations in original qualities and/or functional properties depending on the degree of purifying. The purified Amorphophallus konjac has proven to have the physiological functions as relieving constipation, reducing cholesterol and controlling a blood sugar level, and examples thereof include those available under the trade names of "PROPOL A", "RHEOLEX RS" and "AMOPHOL L" (manufactured by SHIMIZU CHEMICAL CORPORATION).

In the present invention, it is also allowable to use the Amorphophallus konjac in a sol state obtained by being directly mashed, or alternatively, the devil's tongue powder in a state where it is dissolved in water (or in a swelling state).

According to the present invention, as the result of various examinations done for achievement of the above objects, drying was given to a mixture of 1 to 60 % by weight of one or more Amorphophallus konjac and polysaccharide thickeners and 10 to 50 % by weight of one or more saccharides shown in (a) described later.
By the way, as drying conditions, drying may be made in various manners.
1) Pressure drying that provides drying under pressure higher than atmospheric pressure (1013 HPa)
   This drying manner is also called Puffing and Cannon, wherein three steps, heating, pressurizing and jetting, are taken for drying.
2) Atmospheric drying that provides drying under the same pressure as atmospheric pressure
   Hot air drying, drum drying, foam-mat drying, ultrasonic drying, microwave drying and the like are included.
3) Vacuum drying that provides drying under pressure lower than atmospheric pressure
   Freeze-drying, vacuum drying and the like are included.
4) Air-drying
   While the above manners 1) to 4) are especially adaptable to drying, it is preferable to take the vacuum drying or freeze-drying under reduced pressure, considering the occurrence of deformations, inclusive of restorations and degradations in quality.

While the details of the present invention are now more specifically described with reference to Examples, it is to be understood that the present invention is not limited to the Examples. It is noted that the use of polysaccharide thickeners and inclusion agents as follows will be allowed in the method of the present invention or the following Examples.
(a) Polysaccharide thickeners such as Amorphophallus konjac, seed coat of Plantago ovata (psyllium), carrageenan, xanthan gum, curdlan, pectin, gum Arabic, alginic acid, chitin, chitosan, guar gum, gellan gum, tara gum, tamarind gum, tragacanth gum and pullulan
(b) Inclusion agents comprehensive of general saccharides such as sugar, glucose, lactose, muscovado, fructose, sugar alcohol, reducing sugar, maltose, oligosaccharide and thick malt syrup
(c) Inclusion agents comprehensive of edible oils such as salad oil, seed oil and olive oil, dairy products such as cow's milk and heat-treated condensed milk, honeys, soybean milks, cocoa powders and tomato pastes (juice and ketchup) (1 to 60 % by weight)

While the following Examples include the use of the composition in a dried state and that in a hydrated state, it is to be understood that the composition in the dried state is excellent in handling property such as keeping, and besides, good for being mixed with powdery food materials.

### Example 1

5 to 10 % by weight of purified Amorphophallus konjac and 10 to 30 % by weight of one or more saccharides included in (b) described the above were used, into which water was added and uniformly mixed, and the mixture was then allowed to stand for 16 to 18 hours at room temperature, then formed into a shape about 3 cm high, about 2 cm wide and about 5 cm long, and then subjected to pre-freezing for 20 hours at -30°C, followed by drying with the degree of vacuum controlled so as to provide reduced pressure of 10 to 250 Pa. A definite-shaped thermally-reversible dietary fiber composition containing 2 to 7 % of water was obtained in this manner.

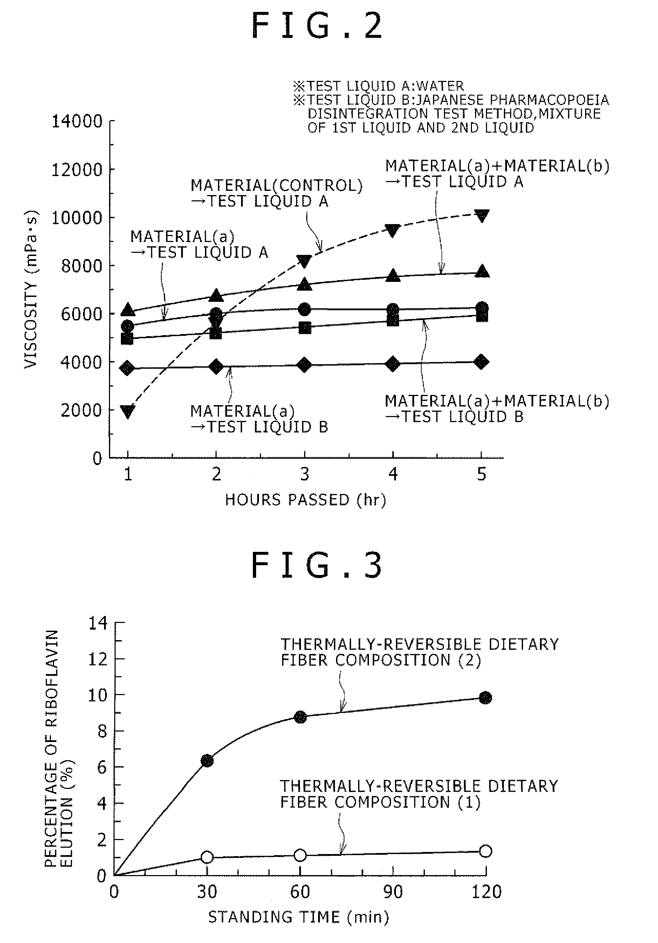

A viscosity recovery test was made on the composition of Example 1 and as a consequence, a viscosity test was made, using water having a temperature of 36 to 37°C close to a human body temperature and first and second liquids based on Japanese Pharmacopoeia Disintegration Test method, on the compositions obtained by being controlled so as to provide a certain concentration. Consequently, a dietary fiber composition that is more rapid in appearance of viscosity as compared with a material (control), although involving somewhat change in viscosity with the conditions, could be obtained. FIG. 2 is a graph illustrating the results of the viscosity recovery test on these compositions.

### Example 2

5 to 10 % by weight of purified Amorphophallus konjac and 10 to 30 % by weight of one or more the same saccharides included in (b) as those having been used in Example 1 were used, vitamin B₂ was further added to them, into which water was added and uniformly mixed, and the mixture was then allowed to stand for 16 to 18 hours at room temperature, then formed into a cylindrical shape about 3.5 cm in radius and about 2 cm high, and then subjected to pre-freezing for 23 hours at -30° C, followed by drying with the degree of vacuum controlled so as to provide reduced pressure of 10 to 250 Pa. A definite-shaped thermally-reversible dietary fiber composition containing 2 to 7 % water was obtained in this manner.

A vitamin B₂ elution test was made after the obtained certain-shaped thermally-reversible dietary fiber composition has been processed to crushed. Compositions indicated by (1) and (2) in FIG. 3 are respectively as follows.
(1) Thermally-reversible dietary fiber composition ... Non-crushed after purified
(2) Thermally-reversible dietary fiber composition ... Crushed into 7 (1.03 mm) to 28 (590 µm) meshes after purified

### (Testing method)

Test liquid, in which each 3 g of the above thermally-reversible dietary fiber compositions (1) and (2) was added in 100 ml of water having a temperature of 36 to 37°C and then allowed to stand in a shaking thermostat for 30, 60 and 120 minutes, was sampled for determination with a liquid chromatography. FIG. 3 shows the measurement results.

While the crushed composition (the thermally-reversible dietary fiber composition (2)) having a large surface area was greater in elution amount, the elution amount thereof was not observed so much. In common to both the compositions, the elution amount after the lapse of 60 minutes was proven to become smaller.

### Example 3

5 to 10 % by weight of purified Amorphophallus konjac and 10 to 30 % by weight of one or more saccharides included in (b) described the above were used, into which medicinal liquor containing a medicinal ingredient was added together with water and uniformly mixed, and the mixture was then allowed to stand for 16 to 18 hours at room temperature, then formed into a cylindrical shape about 3.5 cm in radius and about 2 cm high, and then subjected to pre-freezing for 19 hours at -28°C, followed by drying with the degree of vacuum controlled so as to provide reduced pressure of 10 to 250 Pa. A definite-shaped thermally-reversible dietary fiber composition containing 2 to 7 % of water was obtained in this manner.

### Example 4

To 20 parts of salad oil, 1 and 2 parts of Amorphophallus konjac were respectively added and mixed, each mixture was then allowed to stand for a while, and into which water was added so that Amorphophallus konjac concentrations reach 0.5 and 1.0 %, respectively.
The results confirm a viscosity recovery rate (viscosity of only Amorphophallus konjac) of 101.3% with respect to the Amorphophallus konjac of 0.5% concentration and that of 102.7% for 1.0 % concentration.
Thus, the sufficient viscosity recovery of Amorphophallus konjac was proven to be attainable by soaking it with the sufficient amount of water, even with the salad oil added.

### Example 5

Alternatively, the viscosity recovery test was made by using a combination of Amorphophallus konjac with sweetened condensed milk as a substitute for the salad oil, and the viscosity recovery of Amorphophallus konjac was also proven to be attainable by adding water likewise.
To 10 parts of sweetened condensed milk, 2 and 4 parts of Amorphophallus konjac were respectively added and uniformly mixed, each mixture was then allowed to stand for a while, into which water was added so that the final Amorphophallus konjac concentrations respectively reach 1 and 2%, and the viscosity recovery test was then made, resulting in 98.2% for 1% concentration and 100.3% for 2% concentration.

### Example 6

To 5 parts of honey, 1 and 2 parts of Amorphophallus konjac were respectively added and uniformly mixed, each mixture was then allowed to stand for a while, into which water was added so that the Amorphophallus konjac concentrations respectively reach 0.5 and 1 %, and the viscosity recovery test was then made.
The results confirm the viscosity recovery of 100.3 % for 0.5% concentration and that of 98.6% for 1% concentration.

### Example 7

To 3 to 5 parts of cow's milk, 1 and 2 parts of Amorphophallus konjac were respectively added and uniformly mixed, each mixture was then allowed to stand for a while, into which water was added so that the Amorphophallus konjac concentrations respectively reach 0.5 and 1%, and the viscosity recovery test was then made.
The results confirm the viscosity recovery of 98.1% for 0.5% concentration and that of 98.0% for 1% concentration.
It is noted that the reason to add the water finally in the above Examples is that it is assumed that a thickening property will be provided in case where the water is absorbed in the human body after taken. Thus, this thickening property is expected to result in an increase in functional properties for the human body. It is also noted that the temperatures from 36 to 37°C of the water added are those provided on the assumption of a body fluid temperature.

### Industrial Applicability

The polysaccharide thickener-containing dietary fiber composition of the present invention is used as the ingredient for the foods, the medicines, the cosmetics or the like, or alternatively, allowable to be used by adding it in other materials.

## Claims

1. A polysaccharide thickener-containing dietary fiber composition **characterized by** being obtained by adding and mixing water in Amorphophallus konjac with an average molecular weight of 50,000 or more purified using an alcohol from a matter in which starch is separated and removed from a tuber of Amorphophallus konjac plant and an inclusion agent which suppresses a water-absorbing property of Amorphophallus konjac.

2. The polysaccharide thickener-containing dietary fiber composition according to claim 1, wherein the inclusion agent consists of at least one or more materials selected from a group consisting of saccharides, edible oils, dairy products such as cow's milk and sweetened condensed milk, honeys, soybean milks, cocoa powders and tomato pastes (juice and ketchup).

3. The polysaccharide thickener-containing dietary fiber composition according to claim 1 or 2, wherein the polysaccharide thickener is contained in an amount of 1 to 60 % by weight with respect to materials other than water.

4. The polysaccharide thickener-containing dietary fiber composition according to claim 1 or 2, wherein the composition is given drying in the manner of vacuum drying or freeze-drying under reduced pressure.

5. A polysaccharide thickener-containing dietary fiber composition **characterized by** being obtained by adding and mixing water in one or more members selected from polysaccharide thickeners consisting of Amorphophallus konjac, seed coat of Plantago ovata (psyllium), carrageenan, xanthan gum, curdlan, pectin, gum Arabic, alginic acid, chitin, chitosan, guar gum, gellan gum, tara gum, tamarind gum, tragacanth gum and pullulan and an inclusion agent which suppresses a water-absorbing property of the polysaccharide thickeners.

6. The polysaccharide thickener-containing dietary fiber composition according to claim 5, wherein the inclusion agent consists of at least one or more materials selected from a group consisting of saccharides, edible oils, dairy products such as cow's milk and sweetened condensed milk, honeys, soybean milks, cocoa powders and tomato pastes juice and ketchup).

7. The polysaccharide thickener-containing dietary fiber composition according to claim 5 or 6, wherein the polysaccharide thickener is contained in an amount of 1 to 60 % by weight with respect to materials other than water.

8. The polysaccharide thickener-containing dietary fiber composition according to claim 5 or 6, wherein the composition is given drying in the manner of vacuum drying or freeze-drying under reduced pressure.
